Europäisches Patentamt

European Patent Office

Office européen des brevets

(19)

(11) **EP 1 722 371 A1**

(12) **EUROPEAN PATENT APPLICATION**

(43) Date of publication:
**15.11.2006 Bulletin 2006/46**

(51) Int Cl.:
*G11B 27/28* (2006.01)  *G06F 17/30* (2006.01)
*G11B 27/22* (2006.01)  *G11B 27/10* (2006.01)
*G11B 27/031* (2006.01)

(21) Application number: **06252391.5**

(22) Date of filing: **05.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **09.05.2005 KR 20050038491**

(71) Applicant: **Samsung Electronics Co., Ltd.**
**Suwon-si, Gyeonggi-Do (KR)**

(72) Inventors:
• **Hwang, Doosun**
  **Eunpyeong-gu**
  **Seoul (KR)**

• **Eom, Kiwan**
  **Gwanak-gu**
  **Seoul (KR)**
• **Moon, Youngsu**
  **Yangcheon-gu**
  **Seoul (KR)**
• **Kim, Jiyeun**
  **Songpa-gu**
  **Seoul (KR)**

(74) Representative: **Greene, Simon Kenneth**
**Elkington and Fife LLP,**
**Prospect House,**
**8 Pembroke Road**
**Sevenoaks,**
**Kent TN13 1XR (GB)**

(54) **Apparatus and method for summarizing moving-picture using events, and computer-readable recording medium storing computer program for controlling the apparatus**

(57)    A moving-picture summarizing apparatus and method using events, and a computer-readable recording medium having embodied thereon a computer program for controlling the apparatus. The moving-picture summarizing apparatus includes: a video summarizing unit combining or segmenting shots considering a video event component detected from a video component of a moving-picture, and outputting the combined or segmented result as a segment; and an audio summarizing unit combining or segmenting the segment on the basis of an audio event component detected from an audio component of the moving-picture, and outputting a summarized result of the moving-picture, wherein the video event is an effect inserted where the content of the moving-picture changes and the audio event is the type of sound by which the audio component is identified. The apparatus can correctly combine or segment shots based on their contents, summarize a moving-picture differentially according to genre, and summarize a moving-picture at a high speed.

FIG. 1

**Description**

BACKGROUND OF THE INVENTION

The present invention relates to an apparatus for processing or using a moving-picture, such as audio and/or video storage media, multimedia personal computers, media servers, Digital Versatile Disks (DVDs), recorders, digital televisions and so on, and more particularly, to an apparatus and method for summarizing a moving-picture using events, and a computer-readable recording medium storing a computer program for controlling the apparatus.

Recently, along with the increase in the capacity of data storage media to the range of tera-bytes, developments in data compression technologies, variety in the types of digital devices, multichannelization in broadcasting, the explosion in the creation of personnel contents and so on, the creation of multimedia contents is widespread. However, users often do not have sufficient time to search their desired contents from these various and voluminous multimedia contents, as well as experiencing difficulties in searching them. Accordingly, many users hope that their PCs, etc. summarize and show their desired contents. For example, many users hope that they see their desired contents where they are, see the summarized or highlighted portions of their desired contents, their desired contents or scenes are made as an index, and contents or scenes are provided according to their tastes or moods.

In order to satisfy these users' requirements, various methods for summarizing a moving-picture have been developed. Conventional methods for segmenting and summarizing a moving-picture for each shot are disclosed in U.S. Patent Publications Nos. 6,072,542, 6,272,250 and 6,493,042. However, since these conventional moving-picture summarizing methods divide a moving-picture into too many segments, they do not provide summarized moving-picture information to users.

Conventional methods for summarizing a moving-picture based on similarity of single information are disclosed in U.S. Patents Nos. 5,805,733, 6,697,523, and 6,724,933. These conventional methods summarize a moving-picture based on similarity of color, instead of segmenting a moving-picture based on contents. Therefore, the conventional methods do not always accurately summarize a moving-picture depending on its contents.

A conventional method for compressing a moving-picture based on a multimodal is disclosed in U.S. Patent No. 2003-0131362. However, in this conventional method, a moving-picture is compressed at a very slow speed.

BRIEF SUMMARY

An aspect of the present invention provides a moving-picture summarizing apparatus using events, for correctly and quickly summarizing a moving-picture based on its contents using video and audio events.

An aspect of the present invention further provides a moving-picture summarizing method using events, for correctly and quickly summarizing a moving-picture based on its contents using video and audio events.

An aspect of the present invention further more provides a computer readable recording medium storing a computer program for controlling the moving-picture summarizing apparatus using the events.

According to an aspect of the present invention, there is provided a moving-picture summarizing apparatus using events, comprising: a video summarizing unit combining or segmenting shots considering a video event component detected from a video component of a moving-picture, and outputting the combined or segmented result as a segment; and an audio summarizing unit combining or segmenting the segment on the basis of an audio event component detected from an audio component of the moving-picture, and outputting a summarized result of the moving-picture, wherein the video event is an effect inserted where the content of the moving-picture changes and the audio event is the type of sound by which the audio component is identified.

According to another aspect of the present invention, there is provided a moving-picture summarizing method comprising: combining or segmenting shots considering a video event component detected from a video component of a moving-picture, and deciding the combined or segmented result as a segment; and combining or segmenting the segment on the basis of an audio event component detected from an audio component of the moving-picture, and obtaining a summarized result of the moving-picture, wherein the video event is an effect inserted where the content of the moving-picture changes and the audio event is the type of sound by which the audio component is identified.

According to still another aspect of the present invention, there is provided a computer-readable recording medium having embodied thereon a computer program for controlling a moving-picture summarizing apparatus performing a moving-picture summarizing method using events, the method comprises: combining or segmenting shots considering a video event component detected from a video component of a moving-picture, and deciding the combined or segmented result as a segment; and combining or segmenting the segment on the basis of an audio event component detected from an audio component of the moving-picture, and obtaining a summarized result of the moving-picture, wherein the video event is an effect inserted where the content of the moving-picture changes and the audio event is the type of sound by which the audio component is identified.

Additional and/or other aspects and advantages of the present invention will be set forth in part in the description which follows and, in part, will be obvious from the description, or may be learned by practice of the invention.

BRIEF DESCRIPTION OF THE DRAWINGS

The above and/or other aspects and advantages of the present invention will become apparent and more readily appreciated from the following detailed description, taken in conjunction with the accompanying drawings of which:

FIG. 1 is a block diagram of a moving-picture summarizing apparatus according to an embodiment of the present invention;
FIG. 2 is a flowchart illustrating a moving-picture summarizing method using events according to an embodiment of the present invention;
FIG. 3 is a block diagram of an example 10A of the video summarizing unit shown in FIG. 1, according to an embodiment of the present invention;
FIG. 4 is a flowchart illustrating an example 40A of the operation 40 shown in FIG. 2, according to an embodiment of the present invention;
FIGS. 5A and 5B are graphs for explaining a video event detector shown in FIG. 3;
FIG. 6 is a block diagram of an example 64A of the video shot combining/segmenting unit 64 shown in FIG. 3, according to an embodiment of the present invention;
FIGS. 7A through 7F are views for explaining the video shot combining/segmenting unit shown in FIG. 3;
FIGS. 8A through 8C are views for explaining an operation of the video shot combining/segmenting unit shown in FIG. 6;
FIG. 9 is a block diagram of an example 12A of the audio summarizing unit 12 shown in FIG. 1, according to an embodiment of the present invention;
FIG. 10 is a flowchart illustrating an example 42A of operation 42 illustrated in FIG. 2, according to an embodiment of the present invention;
FIG. 11 is a block diagram of an example of 120A of the audio characteristic value generator 120 shown in FIG. 9, according to an embodiment of the present invention;
FIGS. 12A through 12C are views for explaining segment recombination performed by a recombining/resegmenting unit shown in FIG. 9;
FIGS. 13A through 13C are views for explaining segment resegmentation performed by the recombining/resegmenting unit shown in FIG. 9;
FIG. 14 is a block diagram of a moving-picture summarizing apparatus according to another embodiment of the present invention;
FIG. 15 is a block diagram of a moving-picture summarizing apparatus according to still another embodiment of the present invention; and
FIGS. 16 through 18 are views for explaining the performance of the moving-picture summarizing apparatus and method according to described embodiments of the present invention.

DETAILED DESCRIPTION OF EMBODIMENTS

Reference will now be made in detail to embodiments of the present invention, examples of which are illustrated in the accompanying drawings, wherein like reference numerals refer to the like elements throughout. The embodiments are described below in order to explain the present invention by referring to the figures.

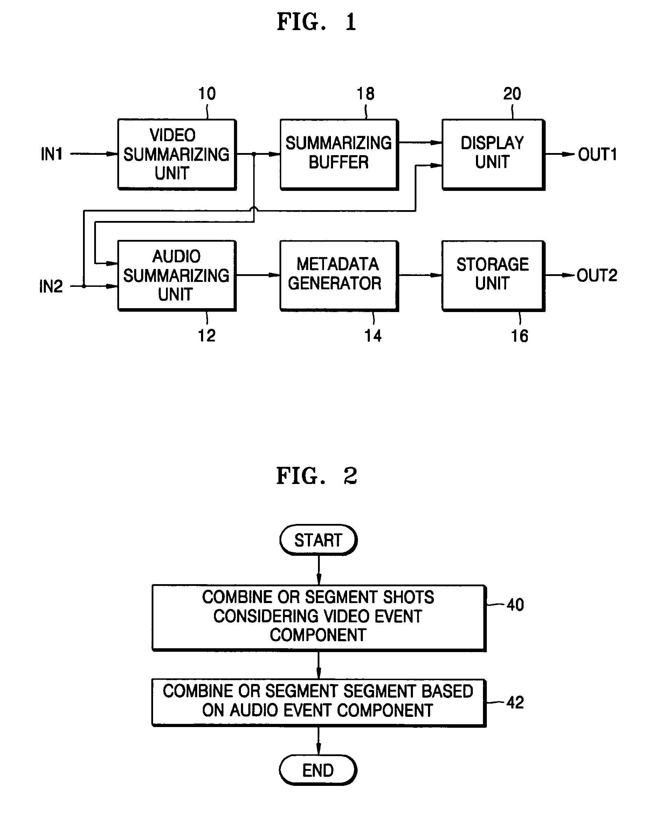

FIG. 1 is a block diagram of a moving-picture summarizing apparatus using events according to an embodiment of the present invention, wherein the moving-picture summarizing apparatus includes a video summarizing unit 10, an audio summarizing unit 12, a metadata generator 14, a storage unit 16, a summarizing buffer 18, and a display unit 20.

Alternately, the moving-picture summarizing apparatus shown in FIG. 1 may consist of only the video summarizing unit 10 and the audio summarizing unit 12.

FIG. 2 is a flowchart illustrating a moving-picture summarizing method using events according to an embodiment of the present invention, wherein the moving-picture summarizing method includes: combining or segmenting shots to obtain segments (operation 40); and combining or segmenting the segments to obtain a summarized result of the moving-picture (operation 42).

The operations 40 and 42 shown in FIG. 2 can be respectively performed by the video summarizing unit 10 and the audio summarizing unit 12, shown in FIG. 1.

Referring to FIGS. 1 and 2, the video summarizing unit 10 shown in FIG. 1 receives a video component of a moving-picture through an input terminal IN1, detects a video event component from the received video component of the moving-picture, combines or segments shots on the basis of the detected video event component, and outputs the combined or segmented results as segments (operation 40). Here, the video component of the moving-picture means the time and color information of the shots, the time information of a fade frame, and so on, included in the moving picture. The video event means a graphic effect intentionally inserted where contents change in the moving-picture. Accordingly, if a video event is generated, it is considered that a change occurs in the contents of the moving-picture. For example, such video event may be a fade effect, a dissolve effect, or a wipe effect, and the like.

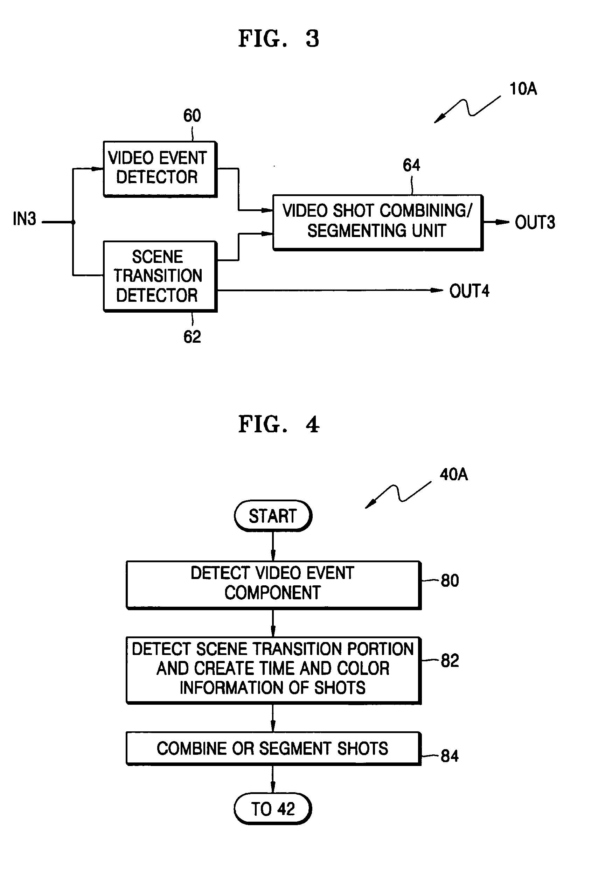

FIG. 3 is a block diagram of the video summarizing unit 10 shown in FIG. 1, according to an example 10A of the present embodiment, wherein the video summarizing unit 10A includes a video event detector 60, a scene transition detector 62, and a video shot combining/segmenting unit 64.

FIG. 4 is a flowchart illustrating operation 40 shown in FIG. 2, according to an example 40A of the present embodiment, wherein the operation 40A includes: detecting a video event component (operation 80); creating time and color information of shots (operation 82); and combining or segmenting the shots (operation 84).

Referring to FIGS. 3 and 4, the video event detector 60 shown in FIG. 3 receives a video component of a moving-picture through an input terminal IN3, detects a video event component from the received video component of the moving-picture, and outputs the detected video event component to the video shot combining/segmenting unit 64 (operation 80).

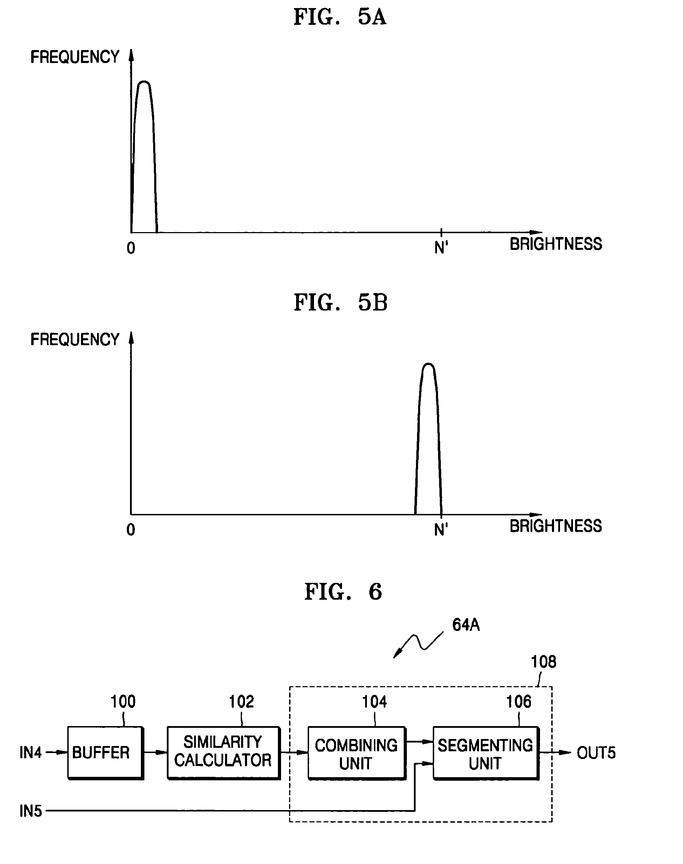

FIGS. 5A and 5B are graphs for explaining the video event detector 60 shown in FIG. 3, wherein the horizontal axis represents brightness, the vertical axis represents frequency, and N' represents maximum brightness.

Referring to FIGS. 3-5B, for facilitating the understanding of the present invention, it is assumed that the video event is a fade effect. In the fade effect, a single color frame exists in the center of frames between a fade-in frame and a fade-out frame. Accordingly, the video event detector 60 detects a single color frame positioned in the center of the fade effect using a color histogram characteristic of the video component of the moving-picture, and can output the detected single color frame as a video event component. For example, the single color frame may be a black frame as shown in FIG. 5A and a white frame as shown in FIG. 5B.

After operation 80, the scene transition detector 62 receives the video component of the moving-picture through the input terminal IN3, detects a scene transition portion from the received video component, outputs the scene transition portion to the audio summarizing unit 12 through an output terminal OUT4, creates time and color information of the same scene period using the scene transition portion, and outputs the created time and color information of the same scene period to the video shot combining/segmenting unit 64 (operation 82). Here, the same scene period consists of frames between scene transition portions, that is, a plurality of frames between a frame at which a scene transition occurs and a frame at which a next scene transition occurs. The same scene period is also called a 'shot'. The scene transition detector 62 selects a single representative image frame or a plurality of representative image frames from each shot, and can output the time and color information of the selected frame(s). The operation performed by the scene transition detector 62, that is, detecting the scene transition portion from the video component of the moving-picture, is disclosed in U.S. Patent Nos. 5,767,922, 6,137,544, and 6,393,054.

According to the present embodiment, it is possible to perform operation 82 before operation 80 or simultaneously perform operations 80 and 82, differently from that illustrated in FIG. 4.

After operation 82, the video shot combining/segmenting unit 64 measures the similarity of the shots received from the scene transition detector 62 using the color information of the shots, combines or segments the shots based on the measured similarity and the video event component received from the video event detector 60, and outputs the combined or segmented result as a segment through an output terminal OUT3 (operation 84).

FIG. 6 is a block diagram of the video shot combining/segmenting unit 64 shown in FIG. 3, according to an example 64A of the present embodiment, wherein the video shot combining/segmenting unit 64A includes a buffer 100, a similarity calculating unit 102, a combining unit 104, and a segmenting unit 106.

Referring to FIGS. 3-6, the buffer 100 stores, that is, buffers the color information of the shots received from the scene transition detector 62 through an input terminal IN4.

The similarity calculating unit 102 reads a first predetermined number of color information belonging to a search window from the color information stored in the buffer 100, calculates the color similarity of the shots using the read color information, and outputs the calculated color similarity to the combining unit 104. Here, the size of the search window corresponds to the first predetermined number and can be variously set according to EPG (Electronic Program Guide) information. According to the present embodiment, the similarity calculating unit 102 can calculate the color similarity using the following Equation 1:

$$Sim(H_1, H_2) = \sum_{n=1}^{N} \min[H_1(n), H_2(n)] \qquad (1).$$

Here, $Sim(H_1, H_2)$ represents the color similarity of two shots $H_1$ and $H_2$ to be compared in similarity, received from the scene transition detector 62, $H_1(n)$ and $H_2(n)$ respectively represent color histograms of the two shots $H_1$ and $H_2$, N is the level of the histogram, and min(x,y) represents a minimum value of x and y based on an existing histogram intersection method.

The combining unit 104 compares the color similarity calculated by the similarity calculating unit 102 with a threshold value, and combines the two shots in response to the compared result.

The video shot combining/segmenting unit 64 can further include a segmenting unit 106. If a video event component is received through an input terminal IN5, that is, if the result combined by the combining unit 104 has a video event component, the segmenting unit 106 segments the result combined by the combining unit 104 on the basis of the video event component received from the event detector 60 and outputs the segmented results as segments through an output terminal OUT5.

According to an embodiment of the present invention, as shown in FIG. 6, the combining unit 104 and the segmenting unit 106 are separately provided. In this case, a combining operation is first preformed and then a segmenting operation is performed.

According to another embodiment of the present invention, the video shot combining/segmenting unit 64 can provide a combining/segmenting unit 108 in which the combining unit 104 is integrated with the segmenting unit 106, but, the combining unit 106 and the segmenting unit 106 are provided separately instead, as shown in FIG. 6. Here, the combining/segmenting unit 108 finally decides shots to be combined and shots to be segmented and then combines the shots to be combined.

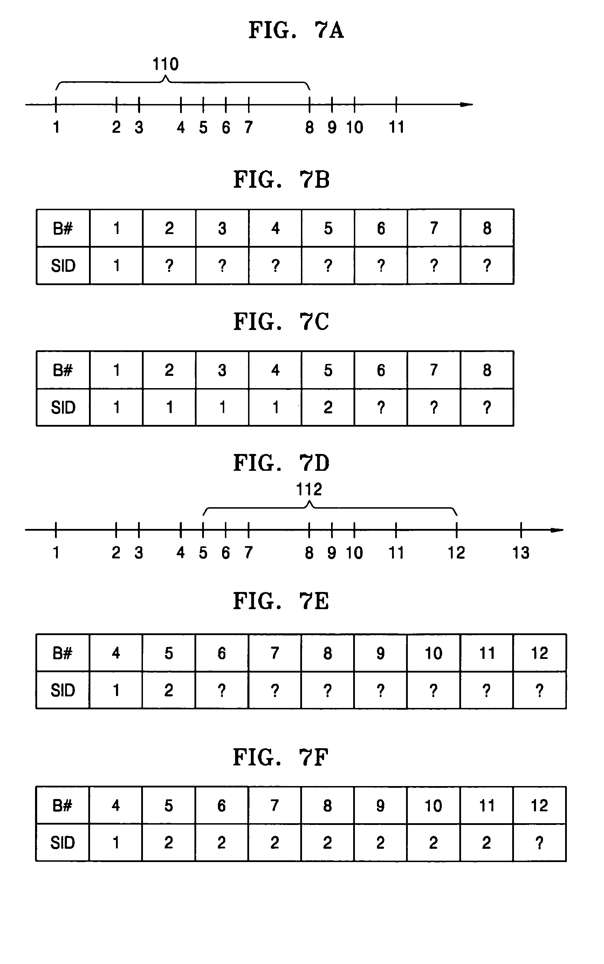

FIGS. 7A through 7F are views for explaining the video shot combining/segmenting unit 64 shown in FIG. 3, wherein FIGS. 7A and 7D each show an order in which a series of shots are sequentially passed in an arrow direction and FIGS. 7B, 7C, 7E, and 7F show tables in which the buffer 100 shown in FIG. 6 is matched with identification numbers of segments. In the respective tables, 'B#' represents a buffer number, that is, a shot number, SID represents an identification number of a segment, and '?' represents that no SID is yet set.

For facilitating the understanding of the present embodiment, it is assumed that the size of the search window, that is, the first predetermined number is '8'. However, it is to be understood that this is a non-limiting example.

Referring to FIGS. 6-7F, first, when shots 1 through 8 corresponding to a search window 110 shown in FIG. 7A are combined or segmented, SID of the first buffer (B#=1) shown in FIG. 7B is set to an arbitrary number, for example, to '1'as shown in FIG. 7B. Here, the similarity calculating unit 102 calculates the similarity of two shots using color information of a shot stored in the first buffer (B#=1) and color information of shots stored in the second through eighth buffers (B#=2 through B#=8).

For example, the similarity calculating unit 102 can check the similarity of two shots starting from a final buffer. That is, it is assumed that the similarity calculating unit 102 checks the similarity of two shots, by comparing a shot corresponding to color information stored in the first buffer (B#=1) with a shot corresponding to color information stored in an eighth buffer (B#=8), comparing the shot corresponding to the color information stored in the first buffer (B#=1) with a shot corresponding to color information stored in the seventh buffer (B#=7), and then comparing the shot corresponding to the color information corresponding to the first buffer (B#=1) with a shot corresponding to color information stored in the sixth buffer (B#=6), etc.

Under the assumption, the combining/segmenting unit 108 compares the similarity $Sim(H_1, H_8)$ between the first buffer (B#=1) and the eighth buffer (B#=8) calculated by the similarity calculating unit 102 with a threshold value. If the similarity $Sim(H_1, H_8)$ between the first buffer (B#=1) and the eighth buffer (B#=8) is smaller than the threshold value, the combining/segmenting unit 108 determines whether or not the similarity $Sim(H_1, H_7)$ between the first buffer (#B=1) and the seventh buffer (#B=7) calculated by the similarity calculating unit 102 is greater than the threshold value. If the similarity $Sim(H_1, H_7)$ between the first buffer B#=1 and the seventh buffer B#=7 is greater than the threshold value, all SIDs corresponding to the first through seventh buffers (B#=1 through B#=7) are set to '1'. In this case, similarity comparisons between the first buffer (B#=1) and the sixth through second buffers (B#=6 through B#=2)) are not performed. Accordingly, the combining/segmenting unit 108 combines the first through seventh shots.

However, in order to provide a video event, for example, a fade effect, it is assumed that a black frame is included in the fourth shot. In this case, when a video event component is received from the video event detector 60 through an input terminal IN5, the combining/segmenting unit 108 sets SIDs of the first buffer (B#=1) through the fourth buffer (B#=4) to '1' and sets SID of the fifth buffer (B#=5) to '2', as shown in FIG. 7C. Accordingly, the combining/segmenting unit 108 combines the first through fourth shots with the same SID.

Then, the combining/segmenting unit 108 checks whether or not to combine or segment shots 5 through 12 belonging to a new search window (that is, a search window 112 shown in FIG. 7D) on the basis of the fifth shot. SIDs of the fifth through twelfth shots corresponding to the search window 112 are initially set as shown in FIG. 7E.

The combining/segmenting unit 108 compares the similarity $Sim(H_5,H_{12})$ between the fifth buffer (B#=5) and the twelfth buffer (B#=12) calculated by the similarity calculating unit 102 with the threshold value. If the similarity $Sim(H_5,H_{12})$ between the fifth buffer (B#=5) and the twelfth buffer (B#=12) is smaller than the threshold value, the combining/segmenting unit 108 determines whether or not the similarity $Sim(H_5,H_{11})$ between the fifth buffer (B#=5) and the eleventh buffer (B#=11) calculated by the similarity calculating unit 102 is greater than the threshold value. If the similarity $Sim(H_5,H_{11})$ between the fifth buffer (B#=5) and the eleventh buffer (B#=11) is greater than the threshold value, the combining/segmenting unit 108 sets all SIDs of the fifth buffer (B#=5) through the eleventh buffer (B#=11) to '2' as shown in FIG. 7F. If no video event is provided, the combining/segmenting unit 108 combines the fifth through eleventh shots with the same SID '2'.

The combining/segmenting unit 108 performs the above operation until SIDs for all shots, that is, for all B#s stored in the buffer 100 are obtained using the color information of the shots stored in the buffer 100.

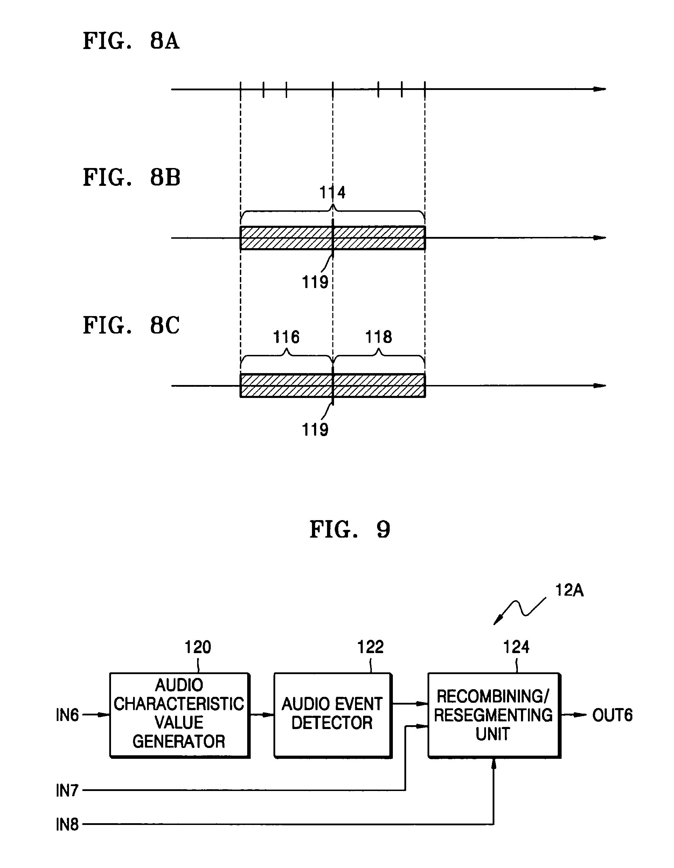

FIGS. 8A through 8C are other views for explaining the operation of the video shot combining/segmenting unit 64A shown in FIG. 6, wherein the horizontal axis represents time.

Referring to FIGS. 2, and 6-8C, for example, it is assumed that the combining unit 104 has combined shots shown in FIG. 8A as shown in FIG. 8B. In this case, if a shot 119 which is positioned in the middle of a segment 114 consisting of the combined shots includes a black frame (that is, a video event component) for providing a video event, for example, a fade effect, the segmenting unit 106 divides the segment 114 into two segments 116 and 118 centering on the shot 119 having the video event component received through the input terminal IN5.

Meanwhile, after operation 40, the audio summarizing unit 12 receives an audio component of the moving-picture through an input terminal IN2, detects an audio event component from the received audio component, combines or segments the segments received from the video summarizing unit 10 on the basis of the detected audio event component, and outputs the combined or segmented result as a summarized result of the moving-picture (operation 42). Here, the audio event means the type of sound of identifying audio components and the audio event component may be one of music, speech, environment sound, hand clapping, a shout of joy, clamor, and silence.

FIG. 9 is a block diagram of the audio summarizing unit 12 shown in FIG. 1, according to an example 12A of the present embodiment, wherein the audio summarizing unit 12A includes an audio characteristic value generator 120, an audio event detector 122, and a recombining/resegmenting unit 124.

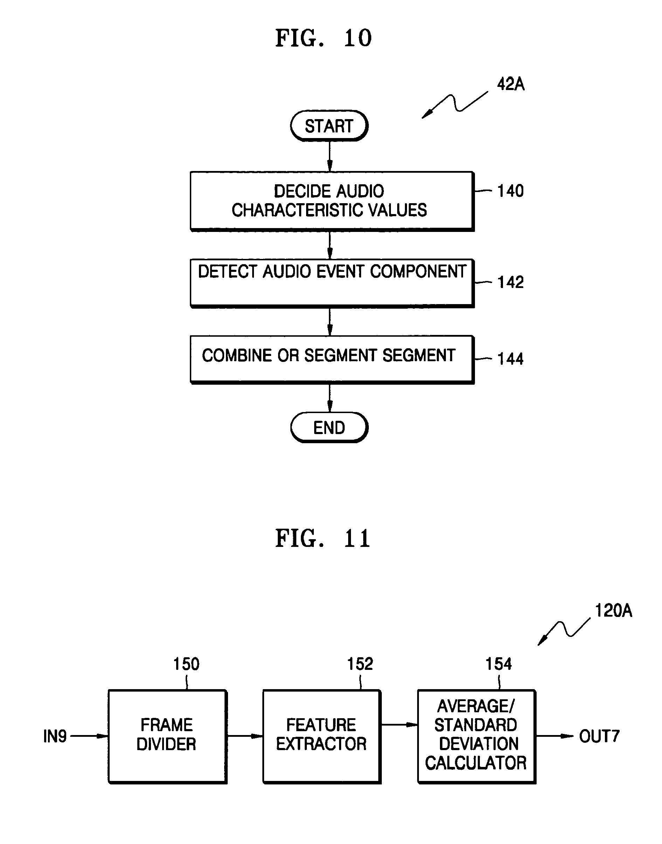

FIG. 10 is a flowchart illustrating operation 42 illustrated in FIG. 2, according to an example 42A of the present embodiment, wherein the operation 42A includes:

deciding audio characteristic values (operation 140); detecting an audio event component (operation 142); and combining or segmenting segments (operation 144).

The audio characteristic value generator 120 shown in FIG. 9 receives an audio component of the moving-picture through an input terminal IN6, extracts audio features for each frame from the received audio component, and obtains and outputs an average and a standard deviation of audio features for a second predetermined number of frames as audio characteristic values to the audio event detector 122 (operation 140). Here, the audio feature may be an MFCC (Mel-Frequency Cepstral Coefficient), a Spectral Flux, a Centroid, an Rolloff, a ZCR, an Energy, or Pitch information, and the second predetermined number may be a positive integer larger than 2, for example, '40'.

FIG. 11 is a block diagram of the audio characteristic value generator 120 shown in FIG. 9, according to an example120A of the present embodiment, wherein the audio characteristic value generator 120A includes a frame divider 150, a feature extractor 152, and an average/standard deviation calculator 154.

The frame divider 150 divides the audio component of the moving-picture received through an input terminal IN9 by a predetermined time, for example, by a frame unit of 24ms. The feature extractor 152 extracts audio features for the divided frame units. The average/standard deviation calculating unit 154 calculates an average and a standard deviation of a second predetermined number of audio features for the second predetermined number of fames, extracted by the feature extractor 152, and outputs the calculated average and standard deviation as audio characteristic values though an output terminal OUT7.

Conventional methods for generating audio characteristic values from audio components of a moving-picture include U.S. Patent No. 5,918,223, U.S. Patent Publication No. 2003-0040904, a paper entitled "Audio Feature Extraction and Analysis for Scene Segment and Classification," by Yao Wang and Tsuhan Chen, and a paper entitled "SVM-based Audio Classification for Instructional Video Analysis," by Ying Li and Chitra Dorai.

Referring to FIGS. 10 and 11, after operation 140, the audio event detector 122 detects audio event components using the audio characteristic values received from the audio characteristic value generator 120, and outputs the detected audio event components to the recombining/resegmenting unit 124 (operation 142).

Conventional methods for detecting audio event components from audio characteristic values include various statistical learning models, such as a GMM (Gaussian Mixture Model), an HMM (Hidden Markov Model), a NN (Neural Network), an SVM (Support Vector Machine), and the like. Here, a conventional method for detecting audio events using SVM is disclosed in a paper entitled "SVM-based Audio Classification for Instructional Video Analysis," by Ying Li and Chitra Dorai.

After operation 142, the recombining/resegmenting unit 124 combines or segments the segments received from the video summarizing unit 10 through an input terminal IN8, using the scene transition portions received from the scene transition detector 62 through the input terminal IN7, on the basis of the audio event components received from the audio event detector 122, and outputs the combined or segmented result as a summarized result of the moving-picture through an output terminal OUT6 (operation 144).

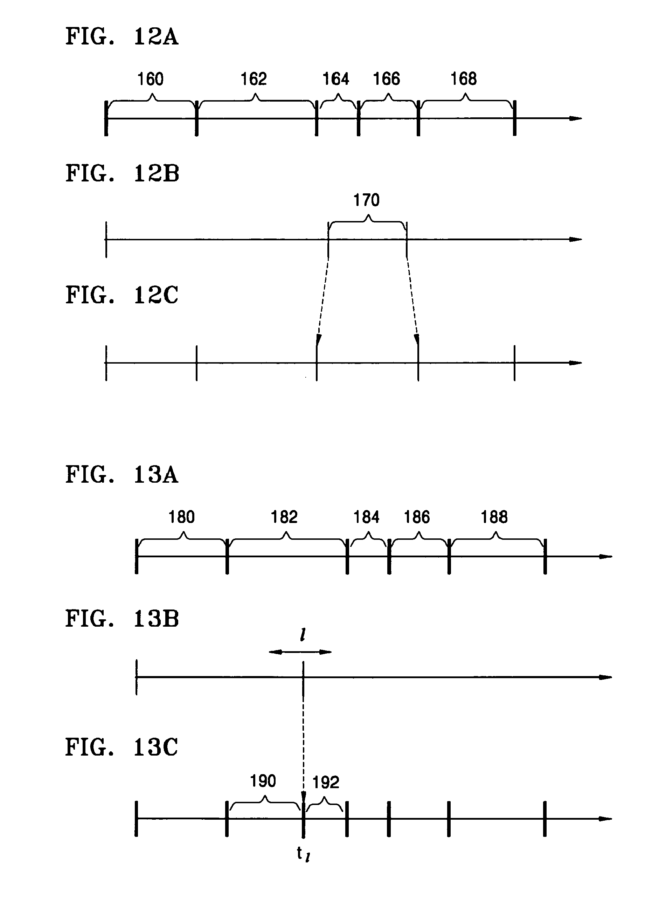

FIGS. 12A through 12C are views for explaining segment recombination performed by the recombining/resegmenting unit 124 shown in FIG. 9, wherein FIG. 12A is a view showing segments received from the video summarizing unit 10, FIG. 12B is a view showing an audio component, and FIG. 12C is a view showing a combined result.

The recombining/resegmenting unit 124 receives segments 160, 162, 164, 166, and 168 as shown in FIG. 12A from the video summarizing unit 10 through the input terminal IN8. Since an audio event component received from the audio event detector 122, for example, a music component is positioned in the middle of the segments 164 and 166, the recombining/resegmenting unit 124 combines the segments 164 and 166 as shown in FIG. 12C, considering that the segments 164 and 166 have the same contents.

FIGS. 13A through 13C are views for explaining segment resegmentation performed by the recombining/resegmenting unit 124 shown in FIG. 9, wherein FIG. 13A is a view showing segments from the video summarizing unit 10, FIG. 13B is a view showing an audio component, and FIG. 13C is a view showing segmented results.

The recombining/resegmenting unit 124 receives segments 180,182, 184, 186, and 188 as shown in FIG. 13A from the video summarizing unit 10 through the input terminal IN8. At this time, if an audio event component received from the audio event detector 122, for example, hand clapping, clamor, or silence continues for a predetermined time I as shown in FIG. 13B, the recombining/resegmenting unit 124 divides the segment 182 into two segments 190 and 192 when a scene transition occurs (at the time $t_I$), using a division event frame which is a frame existing in the scene transition portion received through the input terminal IN7, as shown in FIG. 13C.

Meanwhile, according to another embodiment of the present invention, the moving-picture summarizing apparatus shown in FIG. 1 can further include a metadata generator 14 and a storage unit 16.

The metadata generator 14 receives the summarized result of the moving-picture from the audio summarizing unit 12, generates metadata of the summarized result of the moving-picture, that is, characteristic data, and outputs the generated metadata and the summarized result of the moving-picture to the storage unit 16. Then, the storage unit 16 stores the metadata generated by the metadata generator 14 and the summarized result of the moving-picture and outputs the stored result through an output terminal OUT2.

According to another embodiment of the present invention, the moving-picture summarizing apparatus shown in FIG. 1 can further include a summarizing buffer 18 and a display unit 20.

The summarizing buffer 18 buffers the segments received from the video summarizing unit 10 and outputs the buffered result to the display unit 20. For performing the operation, the video summarizing unit 10 outputs a previous segment to the summarizing buffer 18 whenever a new segment is generated. The display unit 20 displays the buffered result received from the summarizing buffer 18 and the audio component of the moving-picture received from the input terminal IN2.

According to the present embodiment, the video components of the moving-picture can include EPG information and video components included in a television broadcast signal, and the audio components of the moving-picture can include EPG information and audio components included in a television broadcast signal.

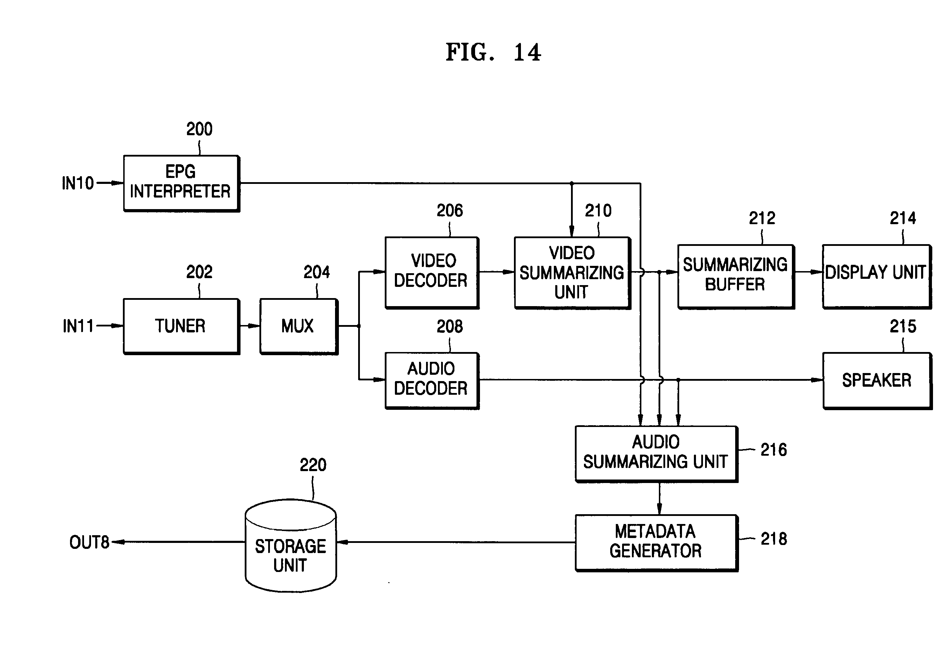

FIG. 14 is a block diagram of a moving-picture summarizing apparatus according to another embodiment of the present invention, wherein the moving-picture summarizing apparatus includes an EPG interpreter 200, a tuner 202, a multiplexer (MUX) 204, a video decoder 206, an audio decoder 208, a video summarizing unit 210, a summarizing buffer 212, a display unit 214, a speaker 215, an audio summarizing unit 216, a metadata generator 218, and a storage unit 220.

The video summarizing unit 210, the audio summarizing unit 216, the metadata generator 218, the storage unit 220, the summarizing buffer 212, and the display unit 214, shown in FIG. 14, respectively correspond to the video summarizing unit 10, the audio summarizing unit 12, the metadata generator 14, the storage unit 16, the summarizing buffer 18, and the display unit 20, shown in FIG. 1, and therefore detailed descriptions thereof are omitted.

Referring to FIG. 14, the EPG interpreter 200 extracts and analyzes EPG information from an EPG signal received through an input terminal IN10 and outputs the analyzed result to the video summarizing unit 210 and the audio summarizing unit 216. Here, the EPG signal can be provided through a web or can be included in a television broadcast signal. In this case, the video component of a moving-picture input to the video summarizing unit 210 includes EPG information and the audio component of the moving-picture input to the audio summarizing unit 216 also includes EPG information. The tuner 202 receives and tunes a television broadcast signal through an input terminal IN11 and outputs the tuned result to the MUX 204. The MUX 204 outputs the video component of the tuned result to the video decoder 206 and outputs the audio component of the tuned result to the audio decoder 208.

The video decoder 206 decodes the video component received from the MUX 204 and outputs the decoded result as the video component of the moving-picture to the video summarizing unit 210. Likewise, the audio decoder 208 decodes the audio component received from the MUX 204 and outputs the decoded result as the audio component of the moving-picture to the audio summarizing unit 216 and the speaker 214. The speaker 215 provides the audio component of the moving-picture as sound.

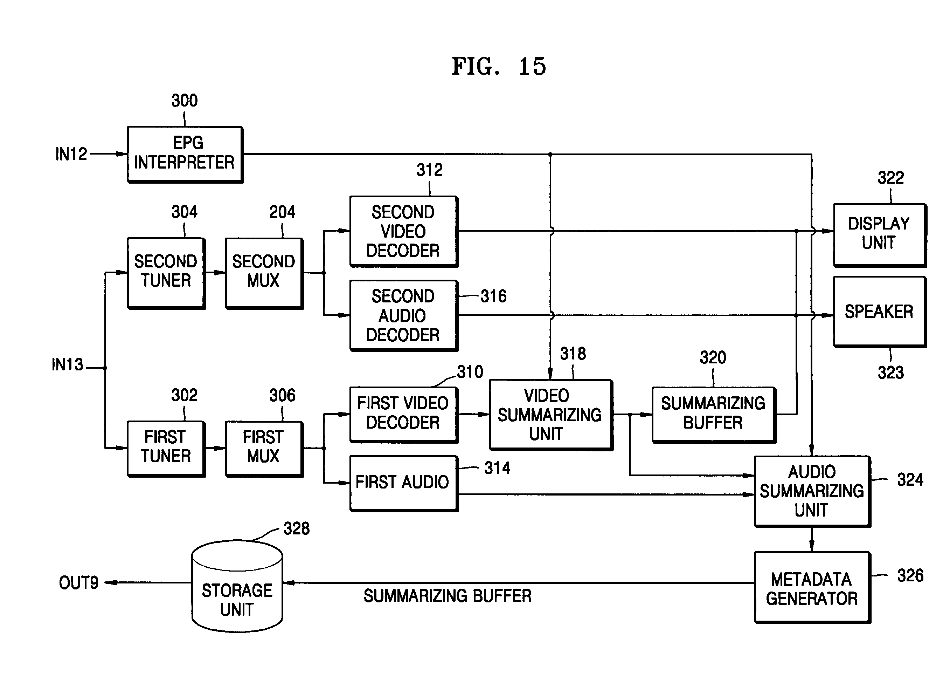

FIG. 15 is a block diagram of a moving-picture summarizing apparatus according to still another embodiment of the present invention, wherein the moving-picture summarizing apparatus includes an EPG interpreter 300, respective first and second tuners 302 and 304, respective first and second MUXs 306 and 308, respective first and second video decoders 310 and 312, respective first and second audio decoders 314 and 316, a video summarizing unit 318, a summarizing buffer 320, a display unit 322, a speaker 323, an audio summarizing unit 324, a metadata generator 326, and a storage unit 328.

The video summarizing unit 318, the audio summarizing unit 324, the metadata generator 326, the storage unit 328, the summarizing buffer 320, and the display unit 322, shown in FIG. 15, respectively correspond to the video summarizing unit 10, the audio summarizing unit 12, the metadata generator 14, the storage unit 16, the summarizing buffer 18, and the display unit 20, shown in FIG. 1, and detailed descriptions thereof are omitted. The EPG interpreter 300 and the speaker 323 shown in FIG. 15 perform the same functions as the EPG interpreter 200 and the speaker 215 shown in FIG. 14, the first and second tuners 302 and 304 perform the same function as the tuner 202, the first and second MUXs 306 and 308 perform the same function as the MUX 204, and the first and second video decoders 310 and 312 perform the same function as the video decoder 206, and the first and second audio decoder 314 and 316 perform the same function as the audio decoder 208, and therefore detailed descriptions thereof are omitted.

The moving-picture summarizing apparatus shown in FIG. 15 includes two television broadcast receiving paths differently from the moving-picture summarizing apparatus shown in FIG. 14. One of the two television broadcast receiving paths includes the second tuner 304, the second MUX 308, the second video decoder 312, and the second audio decoder 316, and allows a user to watch a television broadcast through the display unit 322. The other of the two television broadcast receiving paths includes the first tuner 302, the first MUX 306, the first video decoder 310, and the first audio decoder 314, and summarizes and stores a moving-picture.

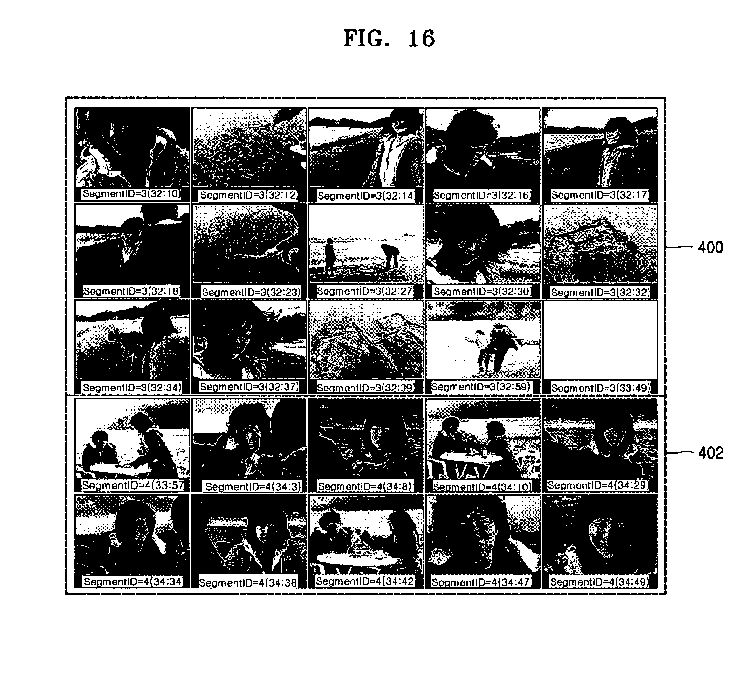

FIGS. 16 through 18 are views for explaining the performances of the moving-picture summarizing apparatus and method according to an embodiment of the present invention, wherein 'SegmentID' of 'SegmentID=x(a:b)' means a SID described above, and a and b respectively represent a minute and a second at which a representative frame is displayed.

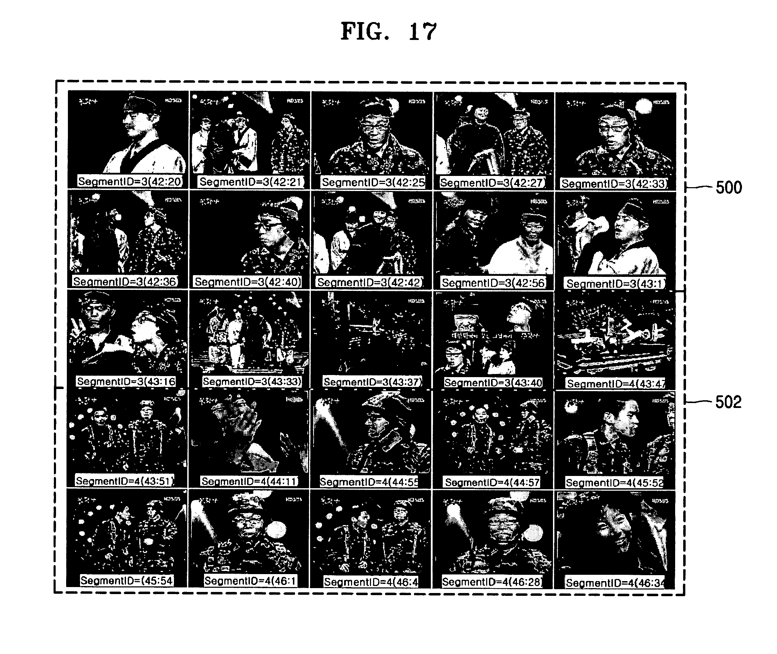

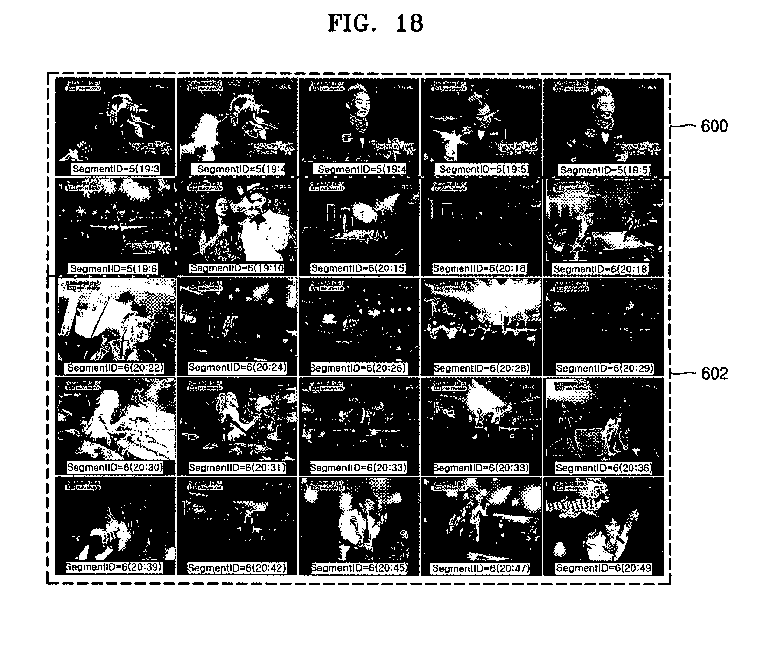

As shown in FIG. 16, the representative frames of a shot whose SegmentID is set to 3 are summarized to a segment 400 and the representative frames of a shot whose SegmentID is set to 4 are summarized to another segment 402. Likewise, as shown in FIG. 17, the representative frames of a shot whose SegmentID is set to 3 are summarized to a segment 500 and the representative frames of a shot whose SegmentID is set to 4 are summarized to another segment 502. Likewise, as shown in FIG. 18, the representative frames of a shot whose SegmentID is set to 5 are summarized to a segment 600 and the representative frames of a shot whose segmentID is set to 6 are summarized to another segment 602.

Meanwhile, the above-described embodiments of the present invention can also be embodied as computer readable codes/instructions/programs on a computer readable recording medium. Examples of the computer readable recording medium include storage media, such as magnetic storage media (for example, ROMs, floppy disks, hard disks, magnetic tapes, etc.), optical reading media (for example, CD-ROMs, DVDs, etc.), carrier waves (for example, transmission through the Internet) and the like. The computer readable recording medium can also be distributed over network coupled computer systems so that the computer readable code is stored and executed in a distributed fashion.

In a moving-picture summarizing apparatus and method using events and a computer-readable recording medium for controlling the apparatus, according to the above-described embodiments of the present invention, since shots can be correctly combined or segmented based on contents using video and audio events and a first predetermined number can be variously set according to genre on the basis of EPG information, it is possible to differentially summarize a moving-picture according to genre on the basis of EPG information. Also, since a moving-picture can be summarized in advance using video events, it is possible to summarize a moving-picture at a high speed.

Although a few embodiments of the present invention have been shown and described, the present invention is not limited to the described embodiments. Instead, it would be appreciated by those skilled in the art that changes may be made to these embodiments without departing from the principles of the invention, the scope of which is defined by the claims and their equivalents.

**Claims**

1. A moving-picture summarizing apparatus using events, comprising:

   a video summarizing unit arranged to combine or segment shots considering a video event component detected from a video component of a moving-picture, and to output the combined or segmented result as a segment; and an audio summarizing unit arranged to combine or segment the segment on a basis of an audio event component detected from an audio component of the moving-picture, and to output a summarized result of the moving-picture,

   wherein the video event is an effect inserted where the content of the moving-picture changes and the audio event is a type of sound by which the audio component is identifiable.

2. The moving-picture summarizing apparatus of claim 1, wherein the video summarizing unit comprises:

   a video event detector arranged to detect the video event component from the video component;
   a scene transition detector arranged to detect a scene transition portion from the video component and creating time and color information of shots corresponding to a same scene using the detected result;
   a video shot combining/segmenting unit arranged to measure a similarity of the shots using the color information of the shots received from the scene transition detector, and combining or segmenting the shots on a basis of the measured similarity and the video event component.

3. The moving-picture summarizing apparatus of claim 2, wherein the video event detector arranged to detect a single color frame located in a center of a fade effect from the video component and to output the detected single color frame as the video event component, and
   the video event corresponds to the fade effect.

4. The moving-picture summarizing apparatus of claim 2 or 3, wherein the video event is a fade effect, a dissolve effect, or a wipe effect.

5. The moving-picture summarizing apparatus of any of claims 2 to 4,
   wherein the video shot combining/segmenting unit comprises:

   a buffer arranged to store the color information of the shots received from the scene transition detector;
   a similarity calculator arranged to read a first predetermined number of a color information belonging to a search window from the stored color information and to calculate color similarity of the shots using the read color information; and
   a combining unit arranged to compare the color similarity with a threshold value and to combine the compared two shots in response to the compared result.

6. The moving-picture summarizing apparatus of claim 5, wherein the video shot combining/segmenting unit further comprises a segmenting unit arranged to segment the combined result based on the video event component when the combined result has the video event component.

7. The moving-picture summarizing apparatus of claim 5 or 6, wherein the similarity calculator calculates the color similarity using the following equation:

$$Sim(H_1, H_2) = \sum_{n=1}^{N} \min[H_1(n), H_2(n)],$$

   and
   wherein $Sim(H_1, H_2)$ represents the color similarity of the two shots, $H_1(n)$ and $H_2(n)$ represent color histograms of the two shots, N is the level of the histogram, and $\min(x, y)$ represents a minimum value of x and y.

8. The moving-picture summarizing apparatus of claim 5, 6 or 7, wherein the first predetermined number represents a size of the search window and is differently set according to Electronic Program Guide (EPG) information.

9. The moving-picture summarizing apparatus of any of claims 2 to 8, wherein the audio summarizing unit comprises:

> an audio characteristic value generator arranged to extract audio features from an audio component for each frame of the moving picture, and to output, as audio characteristic values, an average deviation and a standard deviation of the audio features for a second predetermined number of frames;
> an audio event detector arranged to detect the audio event component using the audio characteristic values; and
> a recombining/resegmenting unit arranged to combine or segment the segment based on the audio event component and to output the combined or segmented result as a summarized result of the moving-picture.

10. The moving-picture summarizing unit of claim 9, wherein the audio characteristic value generator comprises:

> a frame divider arranged to divide the audio component of the moving-picture into frame units each with a predetermined time;
> a feature extractor arranged to extract audio features of the divided frame units; and
> an average/standard deviation calculating unit arranged to calculate an average deviation and a standard deviation of a second predetermined number of audio features for the second predetermined number of frames, extracted by the feature extractor, and to output the calculated average and standard deviation as the audio characteristic values.

11. The moving-picture summarizing unit of claim 9 or 10, wherein the audio feature is a Mel-Frequency Cepstral Coefficient (MFCC), a Spectral Flux, a Centroid, a Rolloff, a ZCR, an Energy, or Pitch information.

12. The moving-picture summarizing apparatus of claim 9, 10 or 11, wherein the audio event component is one of music, speech, an environment sound, hand clapping, a shout of joy, a clamor, and silence.

13. The moving-picture summarizing apparatus of claim 12, wherein the audio event component is music, and wherein the recombining/resegmenting unit is arranged to combine a plurality of neighboring segments in which the music exists.

14. The moving-picture summarizing apparatus of claim 12, wherein the audio component is hand-clapping, the clamor, or silence,
wherein the recombining/resegmenting unit is arranged to divide a single segment in which the hand clapping, the clamor, or silence exists into two by a division event frame, and
wherein the division event frame is a frame existing at the scene transition portion detected by the scene transition detector.

15. The moving-picture summarizing apparatus of any preceding claim, further comprising:

> a metadata generator arranged to generate metadata of the summarized result of the moving-picture; and
> a storage unit arranged to store the generated metadata and the summarized result.

16. The moving-picture summarizing apparatus of any preceding claim, further comprising:

> a summarizing buffer arranged to buffer the segment received from the video summarizing unit; and
> a display unit arranged to display the buffered result received from the summarizing buffer and the audio component of the moving-picture,

wherein the video summarizing unit is arranged to output a previous segment to the summarizing buffer whenever a new segment is generated.

17. The moving-picture summarizing apparatus of any preceding claim,
wherein the video component of the moving-picture includes Electronic Program Guide (EPG) information and a video component contained in a television broadcast signal.

18. The moving-picture summarizing apparatus of any preceding claim,
wherein the audio component of the moving-picture includes Electronic Program Guide (EPG) information and an audio component contained in a television broadcast signal.

**19.** A moving-picture summarizing method comprising:

combining or segmenting shots considering a video event component detected from a video component of a moving-picture, and outputting the combined or segmented result being a segment; and

combining or segmenting the segment on a basis of an audio event component detected from an audio component of the moving-picture, and obtaining a summarized result of the moving-picture,

wherein the video event is an effect inserted where the content of the moving-picture changes and the audio event is a type of sound by which the audio component is identifiable.

**20.** The moving-picture summarizing method of claim 19, wherein the combining or segmenting shots comprises:

detecting the video event component from the video component;

detecting a scene transition portion from the video component and creating time and color information of shots corresponding to a same scene using the detected result; and

measuring a similarity of the shots from the color information of the shots and combining or segmenting the shots using the measured similarity and the video event component.

**21.** The moving-picture summarizing method of claim 20, wherein the combining or segmenting the segment comprises:

extracting audio features for each frame from the audio component, and outputting as audio characteristic values an average deviation and a standard deviation of audio features for a second predetermined number of frames;

detecting the audio event component using the audio characteristic values; and

combining or segmenting the segment based on the audio event component, and outputting the combined or segmented result as a summarized result of the moving-picture.

**22.** A computer-readable recording medium having embodied thereon a computer program for controlling a moving-picture summarizing apparatus performing a moving-picture summarizing method using events, the method comprising:

a method according to claim 19, 20 or 21.

# FIG. 1

```
                10                    18                   20
        ┌──────────────┐      ┌──────────────┐     ┌──────────────┐
        │    VIDEO     │      │              │     │              │
IN1 ──→ │  SUMMARIZING │ ───→ │ SUMMARIZING  │ ──→ │   DISPLAY    │ ──→ OUT1
        │     UNIT     │      │    BUFFER    │     │     UNIT     │
        └──────────────┘      └──────────────┘     └──────────────┘

        ┌──────────────┐      ┌──────────────┐     ┌──────────────┐
        │    AUDIO     │      │   METADATA   │     │   STORAGE    │
IN2 ──→ │  SUMMARIZING │ ───→ │  GENERATOR   │ ──→ │     UNIT     │ ──→ OUT2
        │     UNIT     │      │              │     │              │
        └──────────────┘      └──────────────┘     └──────────────┘
                12                    14                   16
```

# FIG. 2

```
                    ┌─────────┐
                    │  START  │
                    └─────────┘
                         │
                         ▼
        ┌─────────────────────────────────────┐
        │  COMBINE OR SEGMENT SHOTS            │
        │  CONSIDERING VIDEO EVENT            │──40
        │  COMPONENT                          │
        └─────────────────────────────────────┘
                         │
                         ▼
        ┌─────────────────────────────────────┐
        │  COMBINE OR SEGMENT SEGMENT BASED   │──42
        │  ON AUDIO EVENT COMPONENT           │
        └─────────────────────────────────────┘
                         │
                         ▼
                    ┌─────────┐
                    │   END   │
                    └─────────┘
```

# FIG. 3

10A

60

VIDEO EVENT
DETECTOR

64

IN3

VIDEO SHOT COMBINING/
SEGMENTING UNIT

OUT3

SCENE
TRANSITION
DETECTOR

OUT4

62

# FIG. 4

40A

START

DETECT VIDEO EVENT
COMPONENT — 80

DETECT SCENE TRANSITION PORTION
AND CREATE TIME AND COLOR
INFORMATION OF SHOTS — 82

COMBINE OR SEGMENT SHOTS — 84

TO 42

## FIG. 5A

## FIG. 5B

## FIG. 6

## FIG. 7A

## FIG. 7B

| B# | 1 | 2 | 3 | 4 | 5 | 6 | 7 | 8 |
|---|---|---|---|---|---|---|---|---|
| SID | 1 | ? | ? | ? | ? | ? | ? | ? |

## FIG. 7C

| B# | 1 | 2 | 3 | 4 | 5 | 6 | 7 | 8 |
|---|---|---|---|---|---|---|---|---|
| SID | 1 | 1 | 1 | 1 | 2 | ? | ? | ? |

## FIG. 7D

## FIG. 7E

| B# | 4 | 5 | 6 | 7 | 8 | 9 | 10 | 11 | 12 |
|---|---|---|---|---|---|---|---|---|---|
| SID | 1 | 2 | ? | ? | ? | ? | ? | ? | ? |

## FIG. 7F

| B# | 4 | 5 | 6 | 7 | 8 | 9 | 10 | 11 | 12 |
|---|---|---|---|---|---|---|---|---|---|
| SID | 1 | 2 | 2 | 2 | 2 | 2 | 2 | 2 | ? |

FIG. 8A

FIG. 8B

114

119

FIG. 8C

116        118

119

FIG. 9

12A

120                     122                     124

IN6 → | AUDIO CHARACTERISTIC VALUE GENERATOR | → | AUDIO EVENT DETECTOR | → | RECOMBINING/ RESEGMENTING UNIT | → OUT6

IN7 ——————

IN8 ——————

# FIG. 10

42A

```
                    START

        DECIDE AUDIO                  — 140
     CHARACTERISTIC VALUES

    DETECT AUDIO EVENT COMPONENT     — 142

     COMBINE OR SEGMENT SEGMENT      — 144

                     END
```

# FIG. 11

120A

```
              150            152           154

 IN9 →    FRAME    →    FEATURE    →   AVERAGE/      → OUT7
         DIVIDER        EXTRACTOR      STANDARD
                                       DEVIATION
                                      CALCULATOR
```

FIG. 12A

160    162    164  166    168

FIG. 12B

170

FIG. 12C

FIG. 13A

180    182    184  186    188

FIG. 13B

$l$

FIG. 13C

190    192

$t_l$

**FIG. 14**

EP 1 722 371 A1

## FIG. 15

EP 1 722 371 A1

FIG. 16

FIG. 17

EP 1 722 371 A1

# FIG. 18

EP 1 722 371 A1

**European Patent Office**

# EUROPEAN SEARCH REPORT

Application Number

EP 06 25 2391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAO WANG ET AL: "Using Both Audio and Visual Clues" IEEE SIGNAL PROCESSING MAGAZINE, IEEE SERVICE CENTER, PISCATAWAY, NJ, US, vol. 17, no. 6, November 2000 (2000-11), pages 12-36, XP011089877 ISSN: 1053-5888 * the whole document * | 1-4, 9-15, 19-22 | INV. G11B27/28 G06F17/30 G11B27/22 G11B27/10 G11B27/031 |
| X | EP 1 067 800 A (SONY CORPORATION) 10 January 2001 (2001-01-10) | 1-5, 9-11, 19-22 | |
| Y | * paragraph [0017] - paragraph [0070] * | 7 | |
| X | EP 1 174 879 A (SONY CORPORATION) 23 January 2002 (2002-01-23) * the whole document * | 1,15, 17-19,22 | |
| X | SUNDARAM H ET AL: "Video scene segmentation using video and audio features" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, vol. 2, 30 July 2000 (2000-07-30), pages 1145-1148, XP010513212 ISBN: 0-7803-6536-4 * the whole document * | 1,2, 9-11, 19-21 | TECHNICAL FIELDS SEARCHED (IPC) G11B G06F |

-/--

The present search report has been drawn up for all claims

| Place of search | Date of completion of the search | Examiner |
|---|---|---|
| Munich | 23 August 2006 | Gil Zamorano, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 06 25 2391

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SARACENO C ET AL: "Audio as a support to scene change detection and characterization of video sequences" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, vol. 4, 21 April 1997 (1997-04-21), pages 2597-2600, XP010225687 ISBN: 0-8186-7919-0 | 1,19 | |
| A | * the whole document * | 3,4,9-14 | |
| Y | US 5 821 945 A (YEO ET AL) 13 October 1998 (1998-10-13) * column 5, line 64 - column 7, line 8 * | 7 | |
| A | US 2003/160944 A1 (FOOTE JONATHAN ET AL) 28 August 2003 (2003-08-28) * paragraph [0009] - paragraph [0013]; figure 8 * | 1,2,5,9, 16 | |

TECHNICAL FIELDS SEARCHED (IPC)

The present search report has been drawn up for all claims

| Place of search | Date of completion of the search | Examiner |
|---|---|---|
| Munich | 23 August 2006 | Gil Zamorano, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 2391

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2006

| Patent document cited in search report | | Publication date | Patent family member(s) | | Publication date |
|---|---|---|---|---|---|
| EP 1067800 | A | 10-01-2001 | WO<br>US | 0045603 A1<br>6744922 B1 | 03-08-2000<br>01-06-2004 |
| EP 1174879 | A | 23-01-2002 | JP<br>US | 2002044572 A<br>2002009284 A1 | 08-02-2002<br>24-01-2002 |
| US 5821945 | A | 13-10-1998 | NONE | | |
| US 2003160944 | A1 | 28-08-2003 | JP | 2003259302 A | 12-09-2003 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6072542 A
- US 6272250 B
- US 6493042 B
- US 5805733 A
- US 6697523 B
- US 6724933 B
- US 20030131362 A
- US 5767922 A
- US 6137544 A
- US 6393054 B
- US 5918223 A
- US 20030040904 A